# EUROPEAN PATENT APPLICATION

(11) **EP 4 470 969 A1**
(43) Date of publication of application: **04.12.2024**
(21) Application number: 23176921.7
(22) Date of filing: 02.06.2023
(51) Int. Cl.: C01B 3/04, C01B 3/50, C01B 3/56

(54) **PROCESS FOR PRODUCING CRACKED GAS PRODUCT COMPRISING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Vicari, Lorenzo, 60439 Frankfurt am Main (DE); Lutz, Michael, 60439 Frankfurt am Main (DE); Ulber, Dieter, 60439 Frankfurt am Main (DE)
(74) Representative: Air Liquide

(57) **Abstract**

The proposed invention concerns a process (100) for producing a cracked gas product comprising hydrogen from an endothermic cracking reaction of an ammonia feedstock stream, comprising the following steps:
• Providing an ammonia feedstock stream (101),
• In a main reactor, converting the ammonia feedstock stream into a cracked gas product by performing a main endothermic cracking conversion (102) of said ammonia feedstock stream, the cracked gas product comprising hydrogen, nitrogen and a remaining unconverted portion of ammonia,
• In a secondary reactor, performing a secondary endothermic cracking conversion (104) of the remaining unconverted portion of ammonia into a hydrogen enriched fuel gas,
• Redirecting the hydrogen enriched fuel gas to a fuel device (105), in particular comprising a burner, arranged to perform a combustion reaction (111) of said hydrogen enriched fuel gas, potentially with an additional fuel gas stream,
• Heating the main endothermic cracking conversion (112) with heat provided by said combustion.

## Description

The field of the present invention is that of a process for producing a cracked gas product comprising hydrogen by an endothermic cracking reaction of an ammonia feedstock stream. The invention also relates to an apparatus for producing a cracked gas product comprising hydrogen by an endothermic cracking reaction of an ammonia feedstock stream. The invention also relates to the use of such an apparatus for ammonia cracking.

The production of a cracked gas product comprising hydrogen by an endothermic cracking reaction of an ammonia feedstock stream can be done in a catalytic reactor at elevated temperatures, generally from 500°C to 850°C. Such a unit typically comprises a metallic shell, a catalyst and an external heat source. To achieve a lowest possible CO2 footprint for the cracking process, the external heat source is provided only by a combustion of an ammonia fuel stream in a furnace. The process requires a high quantity of heat and energy, and an unconverted part of the ammonia feedstock stream is lost.

The laminar flame speed obtained with ammonia is about 5 times slower compared to that obtained with methane. This increases the risks of flame lift off (and incomplete combustion), especially when a conventional burner designed for CH4 and similar gaseous hydrocarbon fuels is used for the combustion of ammonia.

It is an aim of the present invention to overcome these problems and to provide a process in which the unconverted ammonia following the ammonia cracking reaction is not completely lost, the fuel consumption is reduced and a stable flame is enabled to be produced starting from ammonia.

For this purpose, the invention proposes a process for producing a cracked gas product comprising hydrogen from an endothermic cracking reaction of an ammonia feedstock stream, comprising the following steps:
- Providing an ammonia feedstock stream,
- In a main reactor, converting the ammonia feedstock stream into a cracked gas product by performing a main endothermic cracking conversion of said ammonia feedstock stream, the cracked gas product comprising hydrogen, nitrogen and a remaining unconverted portion of ammonia,

- In a secondary reactor, performing a secondary endothermic cracking conversion of the remaining unconverted portion of ammonia into a hydrogen enriched fuel gas,
- Redirecting the hydrogen enriched fuel gas to a fuel device, in particular a fuel device comprising a burner, arranged to perform a combustion reaction of said hydrogen enriched fuel gas, potentially with an additional fuel gas stream,
- Heating the main endothermic cracking conversion with heat provided by said combustion.

According to one aspect of the invention, the process comprises a step of separating the remaining unconverted ammonia from the cracked gas product, thereby producing an unconverted ammonia depleted cracked gas product comprising the hydrogen and the nitrogen. The separated remaining unconverted ammonia is fed to the secondary reactor as a separated unconverted ammonia stream, typically comprising from 90 to 100 mol% of ammonia.

According to one aspect of the invention, the separated remaining unconverted ammonia is directly sent to the secondary reactor.

According to one aspect of the invention, the remaining unconverted portion of ammonia from the main reactor is separated by an ammonia separation unit, before being sent to the secondary reactor.

According to one aspect of the invention, the remaining unconverted portion of ammonia from the main reactor is separated by an ammonia separation unit, said ammonia separation unit being placed upstream a hydrogen separation unit.

The unconverted portion of ammonia is a part of the ammonia feedstock stream that has not reacted during the main endothermic cracking conversion and which remains unconverted at the end of the main endothermic cracking conversion. The ammonia feedstock stream comprises typically at least 98,5 mol% of ammonia. The cracked gas product comprises typically from 0,001 mol% to 20 mol% of ammonia.

According to one aspect of the invention, the secondary endothermic cracking conversion is performed at a lower pressure than the main endothermic cracking conversion.

According to one aspect of the invention, the step of separating the unconverted portion of ammonia from the cracked gas product is for example performed by Temperature Swing Adsorption (acronym TSA) or by Pressure Swing Adsorption (acronym PSA).

Alternatively or in addition, the step of separating the remaining unconverted portion of ammonia from the cracked gas product is performed by a wash process to absorb the remaining unconverted ammonia in a liquid phase such as water, and by recovering the ammonia in said liquid phase by using an ammonia stripping column using a desorption process or by using a distillation column.

According to another aspect of the invention, the step of separating the remaining unconverted portion of ammonia from the cracked gas product is performed by condensation of said unconverted portion of ammonia.

According to another aspect of the invention, the process comprises as step of expanding the separated ammonia stream to a lower pressure. In addition or alternatively, the process comprises as step of expanding the hydrogen enriched fuel gas to a lower pressure prior to redirecting said hydrogen enriched fuel gas to the fuel device. Advantageously, the secondary endothermic cracking conversion is performed at a higher pressure than a pressure of the fuel device. Fluctuations of pressure in the fuel device can be stabilized and the fuel device, in particular the burner, does not see potential fluctuations.

We understand that, in the present invention, the process comprises a step of directing the separated unconverted ammonia stream to the secondary endothermic cracking conversion. The secondary endothermic cracking conversion is performed in the secondary reactor. The product obtained following this secondary endothermic cracking conversion is the hydrogen enriched fuel gas stream.

According to one aspect of the invention, the process comprises a step of mixing the hydrogen enriched fuel gas stream with an ammonia fuel stream.

In one aspect of the invention, the hydrogen enriched fuel gas obtained during the secondary cracking conversion is directed to a fuel header by a hydrogen enriched fuel stream duct. A hydrogen enriched ammonia fuel stream is thus obtained.

According to another aspect of the invention, the hydrogen enriched fuel gas is combusted in the combustion reaction without mixing with a fuel gas stream, in particular without mixing with an ammonia fuel stream.

According to one aspect of the invention, the process comprises a step of combusting the hydrogen enriched ammonia fuel stream in a firing chamber. The combustion reaction is arranged to provide heat to the main cracking conversion.

According to one aspect of the invention, the main endothermic cracking conversion is performed at a temperature comprised between, 400 and 800°C, or between 500 and 800°C

According to one aspect of the invention, the secondary endothermic cracking conversion is performed at a temperature comprised between 450 and 650°C

According to one aspect of the invention, the main endothermic cracking conversion is performed at a pressure comprised between 20 and 70 bar.

According to one aspect of the invention, the secondary endothermic cracking conversion is performed at a pressure lower than 10 bar, preferably comprised between 0.7 and 5 bar.

According to one aspect of the invention, the main endothermic cracking conversion is performed in at least one main catalyst bed arranged to promote said main cracking reaction.

According to one aspect of the invention, the secondary endothermic cracking conversion is performed in a secondary catalyst bed arranged to promote said secondary cracking reaction.

According to one aspect of the invention, the process comprises a step of separating the hydrogen from the unconverted ammonia depleted cracked gas product, for example by pressure swing adsorption (acronym PSA). The product obtained from this step is a separated hydrogen product gas. According to one aspect of the invention, the step of separating the hydrogen produces an offgas comprising nitrogen and hydrogen, for example an adsorption tail gas (such as a PSA off gas or tail gas) or a cryogenic off gas.

According to one aspect of the invention, the process comprises a step of mixing the hydrogen and nitrogen offgas with the hydrogen enriched fuel gas, and a step of redirecting the obtained hydrogen enriched fuel gas and off gas mix to the fuel device. Advantageously, no additional ammonia fuel stream, in particular no ammonia trim fuel, is needed for heating the main endothermic cracking conversion.

Alternatively or in addition, the process comprises a step of mixing the hydrogen and nitrogen offgas in a mixer with the ammonia fuel stream to be provided to the fuel device.

According to one aspect of the invention, the process comprises a step of redirecting the hydrogen and nitrogen offgas from the hydrogen separation unit to the fuel device, directly or after mixing in a mixer with an ammonia fuel stream.

However, it should be noted that one or more of the fuels could be fed directly to the fuel device without prior mixing.

According to one aspect of the invention, the process comprises a step of providing an ammonia trim fuel to the fuel device as an additional fuel gas stream for heating the main endothermic cracking conversion. The ammonia trim fuel comprises for example a portion of the cracked gas product, a portion of the unconverted ammonia depleted cracked gas product or a portion of the separated hydrogen product gas.

Advantageously, a balanced heat demand of the main endothermic cracking reactor can be maintained.

According to one aspect of the invention, the ammonia trim fuel is provided to the ammonia fuel stream by an ammonia trim fuel circulation duct fluidically connected to the fuel header.

According to one aspect of the invention, the ammonia trim fuel is provided to the secondary endothermic cracking reaction.

According to one aspect of the invention, the ammonia trim fuel is provided to the secondary endothermic cracking reaction by the ammonia trim fuel circulation duct, said ammonia trim fuel circulation duct being fluidically connected to the secondary reactor in which the secondary endothermic cracking reaction is performed.

According to one aspect of the invention, the process comprises a step of exhausting an effluent gas stream produced by the combustion reaction and/or by the main endothermic cracking conversion.

According to one aspect of the invention, the process comprises a step of recovering heat (heat recovery step) from said exhausted effluent gas stream in a heat recovery step. Advantageously, the process comprises a step of heating the secondary endothermic cracking conversion with the recovered heat.

According to one aspect of the invention, the step of heating the secondary endothermic cracking conversion comprises a step of directing the recovered heat to the secondary reactor in a heat redirection step, the secondary reactor comprising a gas reaction section in which the secondary catalytic endothermic conversion is performed.

According to one aspect of the invention, the step of heating the secondary endothermic cracking conversion comprises a step of transferring the recovered heat to the secondary endothermic cracking conversion through a thermal conductive layer at least partly delimiting the gas reaction section, in a heat transfer step.

In one aspect of the invention, the secondary endothermic cracking conversion is performed with a conversion rate similar or higher than the main endothermic cracking conversion rate.

In one aspect of the invention, the secondary catalytic conversion rate is comprised between 80% and 100%.

In one aspect of the invention, the secondary endothermic cracking conversion is realized at a lower temperature than the main endothermic cracking conversion.

In one aspect of the invention, the secondary reactor is a non-adiabatic reactor. An adiabatic reactor relates to a reactor performing a reaction during which no heat exchange occurs between the reaction and the external environment of the reactor. In such an adiabatic reactor, in the case of an endothermic reaction, there is a decrease in temperature from the inlet to the outlet of the reactor. On the contrary, a non-adiabatic reactor is here a reactor in which heat exchanges can occur between the reaction and the external environment of the reactor. In other words, the non-adiabatic reactor is configured for the catalytic endothermic conversion of the separated ammonia stream and for heat exchanges between the effluent gas stream and the secondary endothermic cracking conversion.

In one aspect of the invention, the effluent gas stream comprises a flue gas stream and/or comprises the cracked gas product.

In one aspect of the invention, the step of exhausting the effluent gas stream comprises exhausting the effluent gas stream in an effluent gas duct configured to discharge the effluent gas stream. In particular, the heat recovery step comprises recovering heat from the flue gas stream in the effluent duct.

In one aspect of the invention, the heating step comprises combusting a fuel gas stream thereby producing the flue gas stream in a combustion reaction performed in a firing chamber.

In one aspect of the invention, the step of exhausting the effluent gas stream comprises exhausting the flue gas stream, in particular in a flue gas duct, such as an exhaust tunnel. In particular, the process comprises a step of discharging the flue gas stream from the firing chamber and the heat recovery step comprises recovering heat, in particular in the flue gas duct, from the flue gas stream discharged from the firing chamber.

In one aspect of the invention, the combustion reaction is external to the main reactor.

In one aspect of the invention, the heating step also comprises heating the main reactor by an electrical heating device.

In one aspect of the invention, the step of exhausting the effluent gas stream comprises exhausting the cracked gas product, in particular exhausting the cracked gas product in a cracked gas conduit. In particular, the process comprises a step of discharging the cracked gas product from the main reactor and the heat recovery step comprises recovering heat, in particular in the cracked gas conduit, from the discharged cracked gas product.

In one aspect of the invention, the heat recovery step and the heat redirection step are performed by convection heat transfer from the effluent gas stream to the secondary reactor.

In one aspect of the invention, the convection heat transfer occurs through the fluid movement of the effluent gas stream towards and around the secondary reactor.

In one aspect of the invention, the heat transfer step is performed by heat conduction from the effluent gas, through the thermal conductive layer, to the gas reaction section.

In one aspect of the invention, the heat from the main endothermic cracking conversion is directed to the secondary endothermic cracking conversion by heat exchange between at least part of the effluent gas stream and the separated ammonia stream to be converted into the secondary reactor.

In one aspect of the invention, the heat transfer step occurs through a heat exchanger.

In one aspect of the invention, the secondary reactor is a cracked gas heated secondary reactor and comprises a cracked gas product circulation section arranged in a heat exchange relationship with the gas reaction section, cracked gas product circulation section through which at least part of the cracked gas product circulates.

According to one aspect of the invention, the cracked gas product circulation section comprises at least one cracked gas circulation tube. In one aspect of the invention, the heat exchanger is a fluid-fluid heat exchanger.

According to one aspect of the invention, co-product steam production during the process is reduced compared to an ammonia cracking process without this invention. Preferably, co-product steam production during the catalytic conversion is avoided.

The invention also relates to an apparatus for producing cracked gas product comprising hydrogen by an endothermic cracking reaction of an ammonia feedstock stream, said apparatus comprising:
- A main reactor arranged for producing cracked gas product comprising hydrogen, nitrogen and remaining unconverted ammonia by a main endothermic cracking conversion of the ammonia feedstock stream,
   - An ammonia separation unit arranged for separating the remaining unconverted ammonia from the cracked gas and arranged for producing a separated unconverted ammonia stream and a unconverted ammonia depleted cracked gas product,
- A secondary reactor arranged for producing a hydrogen enriched- fuel gas by a secondary endothermic cracking conversion of the remaining unconverted ammonia of the cracked gas product, in particular the separated unconverted ammonia stream, into a hydrogen enriched fuel gas,
- A fuel device arranged for heating the main catalytic endothermic cracking conversion,
- A hydrogen enriched fuel gas duct arranged for feeding said hydrogen- enriched fuel gas to the fuel device arranged to perform a combustion of the hydrogen- enriched fuel gas.

According to one aspect of the invention, the fuel device comprises at least one burner arranged to combust the hydrogen enriched fuel gas mixture in a firing chamber.

According to one aspect of the invention, the apparatus comprises a cracked gas product circulation duct arranged for the circulation of the cracked gas product from the main reactor to the ammonia separation unit.

According to one aspect of the invention, the ammonia separation unit is arranged to separate the unconverted ammonia of the cracked gas product from a converted part comprising hydrogen and nitrogen, thereby producing an unconverted ammonia depleted cracked gas product comprising the hydrogen and the nitrogen and producing a separated ammonia stream.

According to one aspect of the invention, the ammonia separation unit comprises an ammonia selective adsorbent. In particular, the ammonia separation unit is arranged to perform Temperature Swing Adsorption (acronym TSA) or Pressure Swing Adsorption (acronym PSA) to separate the unconverted ammonia from the cracked gas product.

Alternatively or in addition, the ammonia separation unit is arranged to perform a wash process to absorb the remaining unconverted ammonia in a liquid phase, such as water, and to recover the ammonia in said liquid phase by using an ammonia stripping column using a desorption process or by using a distillation column.

According to one aspect of the invention, the ammonia separation unit is placed upstream of a hydrogen separation unit.

According to one aspect of the invention, the apparatus comprises a separated ammonia stream duct arranged for the circulation of the separated ammonia stream from the recovery unit to the secondary reactor so that the separated ammonia stream circulate through the secondary reactor for the secondary endothermic cracking conversion into the hydrogen enriched fuel gas.

According to one aspect of the invention, the apparatus comprises a hydrogen enriched fuel stream duct arranged for the circulation of said hydrogen enriched fuel gas from the secondary reactor to a fuel header. A hydrogen rich fuel mixture may be obtained. The fuel header is arranged for the circulation of the hydrogen rich fuel mixture to the fuel device for performing the combustion of said hydrogen-containing fuel mixture obtained.

According to one aspect of the invention, the firing chamber of the fuel device is arranged to provide heat to the main cracking conversion in the main reactor.

Accordingto one aspect of the invention, the main reactor comprises at least one main catalyst bed arranged to promote the main cracking reaction.

According to one aspect of the invention, the secondary reactor is arranged to remain at a lower pressure than the main reactor. In particular, In another embodiment, the apparatus comprises an expansion device configured to expand the separated ammonia stream to a lower pressure. Alternatively or in addition, the apparatus comprises an expansion device configured to expand the hydrogen enriched fuel gas prior to feeding said hydrogen enriched fuel gas to the fuel device. The expansion device configured to expand the hydrogen enriched fuel gas is arranged downstream the secondary reactor and upstream the fuel device.

According to one aspect of the invention, the secondary reactor comprises a secondary catalyst bed arranged to promote the secondary cracking reaction.

According to one aspect of the invention, the apparatus comprises a hydrogen separation unit arranged to recover hydrogen from the cracked gas product. The hydrogen separation unit is arranged to recover hydrogen and thus produce a hydrogen product gas and generate an offgas comprising nitrogen and hydrogen. According to one aspect of the invention, the hydrogen separation unit is a pressure swing adsorption unit or a cryogenic unit.

According to one aspect of the invention, the hydrogen separation unit is arranged for separating hydrogen from the unconverted ammonia depleted cracked gas product, thus producing a hydrogen product gas and an offgas comprising hydrogen and nitrogen.

According to one aspect of the invention, the hydrogen separation unit is arranged downstream the ammonia separation unit in the cracked gas product flow direction.

According to one aspect of the invention, the hydrogen separation unit is fluidically connected to an offgas duct arranged for the circulation of said offgas.

According to one aspect of the invention, the apparatus comprises a mixer. In one embodiment, the offgas duct and the hydrogen enriched stream fuel stream duct are connected to the mixer, arranged to mix together the offgas comprising hydrogen and nitrogen and the hydrogen enriched fuel gas and to feed them to the fuel device via a fuel header. In one embodiment, the ammonia trim fuel duct and the hydrogen enriched stream fuel stream duct are connected to the mixer, arranged to mix together the trim fuel and the hydrogen enriched fuel gas and to feed them to the fuel device via a fuel header.

According to one aspect of the invention, an ammonia trim fuel duct is fluidically connected to the fuel device for heating the main endothermic cracking conversion with a trim fuel. A balanced heat demand of the main cracking reactor can be maintained.

According to one aspect of the invention, the ammonia trim fuel duct is fluidically connected to the ammonia stream fuel duct.

According to another aspect of the invention, the ammonia stream fuel duct is fluidically connected to the secondary reactor.

According to another aspect of the invention, the ammonia trim fuel duct is fluidically connected to the hydrogen separation unit and configured to allow using the off gas comprising nitrogen and hydrogen as trim fuel.

In one aspect of the invention, the apparatus comprises at least one effluent gas stream duct arranged to exhaust an effluent gas stream produced by the combustion reaction and/or by the main endothermic cracking conversion.

In one aspect of the invention, the secondary reactor comprises a gas reaction section in which a secondary catalytic endothermic conversion of the separated ammonia stream is performed.

In one aspect of the invention, the gas reaction section comprises a conductive layer at least partially delimiting said gas reaction section.

In one aspect of the invention, the conductive layer is arranged to redirect the heat from the at least one effluent gas stream duct to the secondary reactor.

In one aspect of the invention, the conductive layer is arranged to redirect the heat from the cracked gas product circulation duct to the secondary reactor.

In one aspect of the invention, the at least one effluent gas stream duct is arranged to discharge the effluent gas stream comprising a flue gas stream and/or the cracked gas product.

In one aspect of the invention, the firing chamber is arranged to perform a combustion reaction of a fuel gas stream into the flue gas stream.

In one aspect of the invention, the effluent gas stream duct comprises a flue gas duct, such as an exhaust tunnel, arranged to exhaust the flue gas stream.

In one aspect of the invention, the apparatus comprises an electrical device arranged to heat the main reactor.

In one aspect of the invention, the effluent gas stream duct comprises a cracked gas conduit arranged to exhaust the cracked gas product from the main reactor.

In one aspect of the invention, the apparatus comprises a heat exchanger arranged to perform a heat transfer from the main reactor to the second reactor

In one aspect of the invention, the secondary reactor is a cracked gas heated secondary reactor and comprises a cracked gas product circulation section arranged in a heat exchange relationship with the gas reaction section, cracked gas product circulation section through which at least part of the cracked gas product circulates.

According to one aspect of the invention, the cracked gas product circulation section comprises at least one cracked gas circulation tube. In one aspect of the invention, the heat exchanger is a fluid-fluid heat exchanger.

According to one aspect of the invention, the apparatus comprises a hydrogen and nitrogen offgas duct arranged for the circulation of said hydrogen and nitrogen offgas from the hydrogen separation unit to the fuel header.

According to one aspect of the invention, the apparatus comprises a separated hydrogen stream duct arranged for the circulation of separated hydrogen product gas from the hydrogen separation unit to the purification device.

According to one aspect of the invention, the apparatus comprises an electrical heater arranged for heating the secondary reactor.

The invention also relates to a method of starting-up an apparatus as previously described comprising a step of electrically heating the secondary reactor to perform the secondary endothermic cracking conversion.

Thanks to the invention, the process of ammonia recycle to fuel via fuel cracking advantageously doesn't require a recycle compressor to recycle unconverted ammonia to the ammonia feed.

The invention also enables to avoid multi-stage SCR.

The invention advantageously allows to crack unconverted ammonia at low pressure with much higher conversion than in the main reactor.

The invention also provides:
- a low NOx fuel with higher H2/N2 ratio, the flame stability and reducing the NOx.
- an upgrade of the heat required for the cracking. Cracking the ammonia with hot flue gas / process gas requires some energy potentially at temperatures of 600-800°C. During combustion of the hydrogen enriched fuel gas heat is released at a higher temperature, for instance higher than 900 °C, in the furnace.

The process according to the invention reduces steam production, since a portion of waste heat from flue gas is used as heat source for the secondary reactor. The hydrogen enriched fuel gas allows a broader fuel flammability, even broader than with fuels used for steam methane reforming.

The invention provides fuel at higher temperatures which brings enthalpy to the system, requiring smaller amounts of trim fuel and combustion air with a consequent smaller flue gas formation and overall steam production.

Further features, details and advantages of the invention will become more clearly apparent from reading the description given below by way of indication with reference to the drawings, in which:
[Fig 1] is a schematic view of the process according to a first embodiment of the invention,
[Fig. 2] is a schematic view of the process according to a second embodiment of the invention,
[Fig. 3] is a schematic view of the apparatus according to a first embodiment of the invention,
[Fig. 4] is a schematic view of the apparatus according to a second embodiment of the invention,
[Fig. 5] is a schematic view of the apparatus according to a third embodiment of the invention,
[Fig. 6] is a schematic view of the apparatus according to a fourth embodiment of the invention.

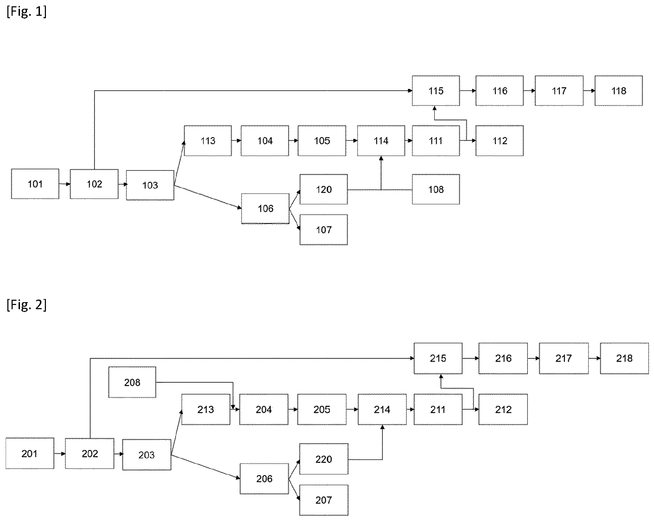

Figure 1 is a schematic view of the process for producing a cracked gas product comprising hydrogen by an endothermic cracking reaction of an ammonia feedstock stream.

The process 100 comprises the following steps:
- Providing an ammonia feedstock stream 101,
- In a main reactor, converting the ammonia feedstock stream into a cracked gas product by performing a main endothermic cracking conversion 102 of said ammonia feedstock stream, the cracked gas product comprising hydrogen, nitrogen and a remaining unconverted portion of ammonia,

- separating the remaining unconverted of ammonia 103 from the cracked gas product following the main endothermic cracking conversion 102, thereby producing an unconverted ammonia depleted cracked gas product comprising the hydrogen and the nitrogen,
- directing the separated ammonia stream 113 to a secondary reactor,
- in the secondary reactor, performing a secondary endothermic cracking conversion 104 of the remaining unconverted ammonia into a hydrogen enriched fuel gas, thus producing the hydrogen enriched fuel gas,
- redirecting the hydrogen enriched fuel gas 105 to a fuel device arranged to perform a combustion reaction 111 of said hydrogen enriched fuel gas, potentially with an additional fuel gas stream comprising an ammonia trim fuel and/or an offgas from an hydrogen separation PSA unit.
- heating 112 the main catalytic endothermic cracking conversion 102 with heat provided by said combustion reaction 111.

The main endothermic cracking conversion 102 is performed in a non-adiabatic reactor, over at least one catalyst bed arranged to promote said main cracking reaction.

The process 100 comprises a step of separating the remaining unconverted portion of ammonia 103 from the cracked gas product following the main endothermic cracking conversion. Said recovery the unconverted portion of ammonia is for example performed by Temperature Swing Adsorption (acronym TSA). After this step of separation of the unconverted portion of ammonia, a separated ammonia stream and an unconverted ammonia depleted cracked gas product are obtained. The separated ammonia stream may also contain other components than ammonia, such as nitrogen and/or hydrogen.

Alternatively, the step of recovery the unconverted portion of ammonia 103 may be performed by using an ammonia stripping column using a desorption process.

The main 102 and the secondary 104 endothermic cracking conversion are performed sequentially in the ammonia feedstock stream flow direction.

The secondary endothermic cracking conversion 104 is performed at a lower pressure than the main endothermic cracking conversion.

The secondary endothermic cracking conversion 104 is performed in a secondary catalyst bed arranged to promote said secondary cracking reaction.

The secondary endothermic cracking conversion 104 is downstream the main endothermic cracking conversion 102 in the ammonia feedstock stream flow direction.

The secondary endothermic cracking conversion is performed with a conversion rate conversion rate similar or higher than the main endothermic cracking conversion rate. For example, the secondary catalytic conversion rate is comprised between 80% and 100%.

The secondary endothermic cracking conversion 104 is realized at a lower temperature than the main endothermic cracking conversion 102, for example between 450 and 650°C

The secondary endothermic cracking conversion 104 is performed in a non-adiabatic reactor.

The process comprises a step of mixing the hydrogen enriched fuel gas stream with an ammonia fuel stream 114. A hydrogen enriched ammonia fuel stream is thus obtained.

The process 100 comprises a step of combusting the hydrogen enriched ammonia fuel stream in a firing chamber 111. The combustion reaction is arranged to provide heat 112 to the main cracking conversion 102.

The process comprises a step of providing an ammonia trim fuel 108 arranged to maintain a balanced heat demand in the main cracker 102.

The heating step 112 comprises combusting a fuel gas stream into the flue gas stream in a combustion reaction 111 performed in a firing chamber.

The combustion reaction 111 is external to the main reactor.

In addition or alternatively, heating step 112 comprises heating the main reactor by an electrical heating device.

The process 100 comprises a step of exhausting an effluent gas stream 115 produced by the combustion reaction 111 and/or by the main endothermic cracking reaction.

The effluent gas stream comprises a flue gas stream and/or the cracked gas product.

The 100 process comprises a step of recovering heat from said effluent gas stream in a heat recovery step 116.

The process 100 comprises a step of directing the recovered heat to the secondary reactor in a heat redirection step 117, the secondary reactor comprising a gas reaction section in which a secondary catalytic endothermic conversion 104 of the ammonia feedstock stream is performed.

The process comprises a step of transferring the redirected heat 118 to the secondary endothermic cracking conversion through a thermal conductive layer at least partly delimiting the gas reaction section, in a heat transfer step.

The step of exhausting the effluent gas stream 115 comprises exhausting the effluent gas stream in an effluent gas duct configured to discharge the effluent gas stream. In particular, the heat recovery step 116 comprises recovering heat from the flue gas stream in the effluent duct.

In one aspect of the invention, the step of exhausting the effluent gas stream 115 comprises exhausting the flue gas stream, in particular in a flue gas duct, such as an exhaust tunnel. In particular, the process 100 comprises a step of discharging the flue gas stream from the firing chamber and the heat recovery step 116 comprises recovering heat, in particular in the flue gas duct, from the flue gas stream discharged from the firing chamber.

In one aspect of the invention, the step of exhausting the effluent gas stream 115 comprises exhausting the cracked gas product instead of the flue gas stream. In particular exhausting the cracked gas product in a cracked gas conduit. In particular, the process 100 comprises a step of discharging cracked gas product from the main reactor and the heat recovery step 116 comprises recovering heat, in particular in the cracked gas conduit from the cracked gas product discharged from the main reactor.

The heat recovery step 116 and the heat redirection step 117 are performed by convection heat transfer from the effluent gas stream to the secondary reactor.

The heat from the main endothermic cracking conversion 102 is directed to the secondary endothermic cracking conversion 104 by heat exchange between at least part of the effluent gas stream and the ammonia feedstock stream to be converted into the secondary reactor.

The heat transfer step 118 occurs through a heat exchanger.

The cracked gas product circulation section comprises at least one cracked gas circulation tube. The heat exchanger is a fluid-fluid heat exchanger.

The process 100 comprises a step of separation of the hydrogen 106 from the unconverted ammonia depleted synthesis gas product. The product obtained from this step is a hydrogen product gas.

The process 100 comprises a step of processing the hydrogen product gas 107, for example a step of purifying the separated hydrogen product gas.

The process 100 comprises a step of directing the hydrogen and nitrogen offgas 120 produced during the hydrogen separation step 107 to the fuel header.

Embodiment of figure 2 is similar to embodiment described in figure 1 except that in figure 2, the ammonia trim fuel is provided 208 to the secondary endothermic cracking reaction 204. The ammonia trim fuel is provided to the secondary endothermic cracking reaction by the ammonia trim fuel circulation duct, said ammonia trim fuel circulation duct being fluidically connected to the secondary reactor in which the secondary endothermic cracking reaction is performed. In figure 2, the references 201, 202... designate respectively the same steps as steps 101, 102 ... described in relation to figure 1,

In a not represented embodiment, the hydrogen enriched fuel gas is combusted in the combustion reaction without mixing with a fuel gas stream, in particular without mixing with an ammonia fuel stream.

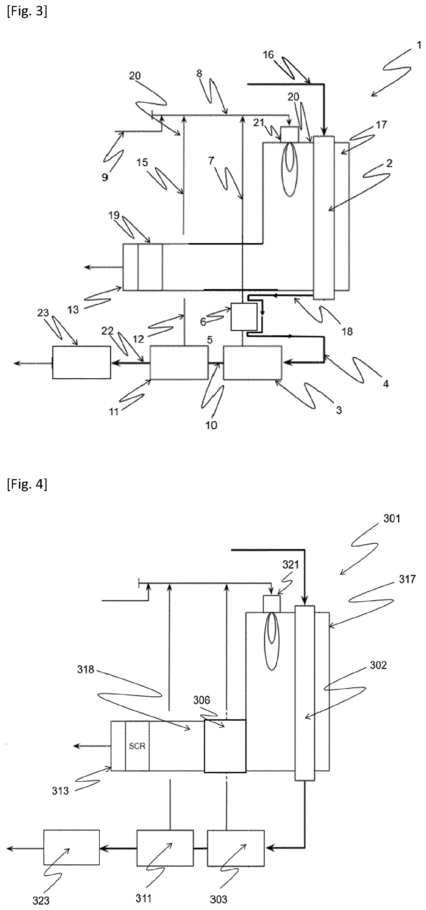

Figure 3 represents an apparatus 1 for performing the process described in figure 1, said apparatus comprising:
- A main reactor 2 arranged for producing cracked gas product comprising hydrogen, nitrogen and unconverted ammonia by a main endothermic cracking conversion of the ammonia feedstock stream,
- A secondary reactor 6 arranged for producing a hydrogen enriched fuel gas by an secondary endothermic cracking conversion of the unconverted ammonia of the cracked gas product,
- A fuel device 20 arranged for heating the main catalytic endothermic cracking conversion,
- A hydrogen enriched fuel gas duct arranged for feeding said hydrogen enriched fuel gas to the fuel device 20 arranged to perform a combustion of the hydrogen enriched fuel gas.

The main reactor 2 comprises a main catalyst bed arranged to promote the main cracking reaction.

The main reactor 2 is a non-adiabatic reactor.

The apparatus 1 comprises a cracked gas conduit 4 arranged to exhaust the cracked gas product from the main reactor 2.

The apparatus 1 comprises a cracked gas conduit 4 arranged for the circulation of the cracked gas product from the main reactor 2 to an ammonia separation unit 3, said ammonia separation unit being arranged for recovering the unconverted ammonia of the cracked gas product.

The unconverted portion of ammonia is a part of the ammonia feedstock stream that has not reacted in the main reactor 2 and which remains unconverted in the cracked gas product circulation duct 4.

The ammonia separation unit 3 is arranged to separate the unconverted ammonia of the cracked gas product from a converted part comprising hydrogen and nitrogen, thus producing a separated ammonia steam and an unconverted ammonia depleted cracked gas product.

The ammonia separation unit 3 is arranged to perform Temperature Swing Adsorption acronym TSA to separate the unconverted ammonia of the cracked gas product.

Alternatively, the ammonia separation 3 unit is arranged to perform a wash process to absorb the remaining unconverted ammonia in a liquid phase such as water, and by recovering to recover the ammonia in said liquid phase by using an ammonia stripping column using a desorption process or by using a distillation column.

The apparatus 1 comprises a separated ammonia stream duct 5 arranged for the circulation of the separated ammonia stream from the recovery unit 3 to the secondary reactor 6 so the separated ammonia stream circulates through the secondary reactor for the secondary endothermic cracking conversion into the hydrogen enriched fuel gas.

The secondary reactor 6 comprises a secondary catalyst bed arranged to promote the secondary cracking reaction.

The secondary reactor 6 is a non-adiabatic reactor.

The secondary reactor 6 is arranged to remain at a lower pressure than the main reactor 2.

The secondary reactor 6 is placed downstream the main reactor in the ammonia feedstock stream flow direction

The apparatus 1 comprises a hydrogen enriched fuel stream duct 7 arranged for the circulation of said hydrogen enriched fuel gas from the secondary reactor 6 to the fuel header 8. A hydrogen rich fuel mixture is obtained. The fuel header is arranged for the circulation of the hydrogen rich fuel mixture to the burner 21 of the fuel device

20 for performing the combustion of said hydrogen rich fuel mixture in the firing chamber 17.

The fuel device 20 comprises at least one burner 21 arranged to combust the hydrogen enriched fuel gas mixture in a firing chamber 17.

The firing chamber 17 is arranged to perform a combustion reaction of a fuel gas stream into the flue gas stream.

The ammonia trim fuel duct 9 is arranged to maintain a balanced heat demand of the main reactor 2.

The ammonia trim fuel duct 9 is fluidically connected to the ammonia fuel header 8.

The firing chamber 17 of the fuel device 20 is arranged to provide heat to the main cracking conversion in the main reactor 2.

The apparatus 1 comprises a heat exchanger (not represented) arranged to perform a heat transfer from the main reactor to the second reactor 6.

The effluent gas stream duct 18 is arranged for the circulation of the cracked gas product.

The secondary reactor 6 is a cracked gas heated secondary reactor and comprises a cracked gas product circulation section arranged in a heat exchange relationship with the gas reaction section, cracked gas product circulation section through which at least part of the cracked gas product circulates.

The cracked gas product circulation section comprises at least one cracked gas conduit 4

The gas reaction section comprises a conductive layer at least partially delimiting said gas reaction section.

The conductive layer is arranged to redirect the heat from the effluent gas stream duct 18 to the secondary reactor 6.

The apparatus 1 comprises a flue gas outlet 13 to exhaust the flue gas stream from the firing chamber 17

The flue gas outlet 13 comprises a NOx flue gas abatement 19, for example a SCR.

The apparatus 1 comprises a hydrogen separation unit 11 arranged to recover hydrogen from the cracked gas product. The hydrogen separation unit is arranged to recover hydrogen and thus produce a hydrogen cracked gas product and generate a nitrogen and hydrogen mixture offgas.

The hydrogen separation unit 11 is arranged downstream the ammonia separation unit 3 in the cracked gas product flow direction.

The apparatus comprises a hydrogen and nitrogen offgas duct 15 arranged for the circulation of said hydrogen and nitrogen offgas from the hydrogen separation unit 11 to the fuel header 8.

The apparatus 1 comprises a separated hydrogen stream duct 22 arranged for the circulation of separated hydrogen product gas from the hydrogen separation unit 11 to the purification device 23.

Embodiment of figure 4 is similar to embodiment described in figure 3 except that in figure 4 a effluent gas stream duct 318 is provided to exhaust an effluent gas stream comprising a flue gas stream produced by the combustion step. In figure 4, the references 301, 302... designates respectively the same elements as elements 1,2 ... described in relation to figure 3.

Said effluent gas stream duct 318 is fluidically connected to the firing chamber 317 on one side, and to the flue gas outlet 313 on the other side.

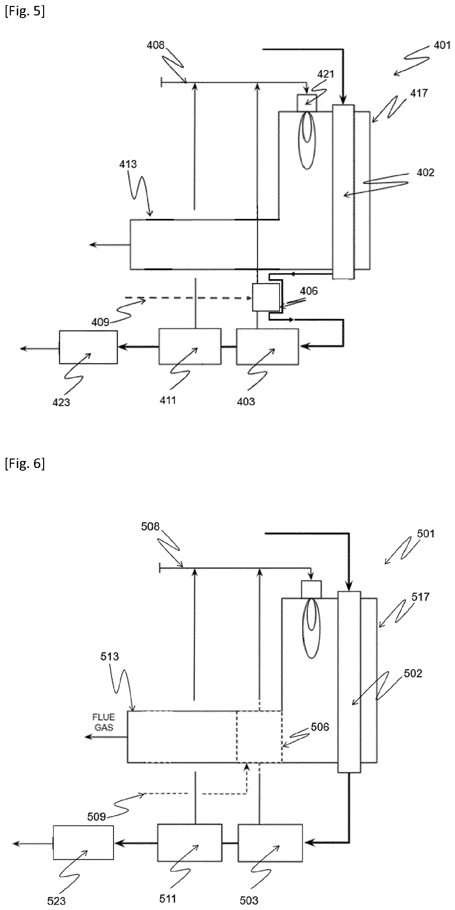

Embodiment of figure 5 is similar to embodiment described in figure 3 except that in figure 5 the ammonia trim fuel duct 409 is fluidically connected to the secondary reactor 406 instead of being connected to the fuel header 408. In figure 5, the references 401, 402... designates respectively the same elements as elements 1,2 ... described in relation to figure 3.

In this embodiment, no NH3 is combusted directly in the combustion chamber 417, so that no NOx flue gas abatement is needed on the flue gas outlet 413.

Embodiment of figure 6 is similar to embodiment described in figure 4 except that in figure 6 the ammonia trim fuel duct 509 is fluidically connected to the secondary reactor 506 instead of being connected to the fuel header 508. In figure 6, the references 501, 502... designates respectively the same elements as elements 1,2 ... described in relation to figure 3.

In this embodiment, no NH3 is combusted directly in the combustion chamber 517, so that no NOx flue gas abatement is needed on the flue gas outlet 513.

## Claims

1. Process (100) for producing a cracked gas product comprising hydrogen from an endothermic cracking reaction of an ammonia feedstock stream, comprising the following steps:
• Providing an ammonia feedstock stream (101),
• In a main reactor, converting the ammonia feedstock stream into a cracked gas product by performing a main endothermic cracking conversion (102) of said ammonia feedstock stream, the cracked gas product comprising hydrogen, nitrogen and a remaining unconverted portion of ammonia,
• In a secondary reactor, performing a secondary endothermic cracking conversion (104) of the remaining unconverted portion of ammonia into a hydrogen enriched fuel gas,
• Redirecting the hydrogen enriched fuel gas to a fuel device (105), in particular comprising a burner, arranged to perform a combustion reaction (111) of said hydrogen enriched fuel gas, potentially with an additional fuel gas stream,
• Heating the main endothermic cracking conversion (112) with heat provided by said combustion.

2. Process according to claim 1, comprising a step of separating (103) the remaining unconverted ammonia from the cracked gas product, thereby producing an unconverted ammonia depleted cracked gas product comprising the hydrogen and the nitrogen.

3. Process according to any of the preceding claims, wherein the secondary endothermic cracking conversion (104) is performed at a lower pressure than the main endothermic cracking conversion (102).

4. Process according to any of the preceding claims, wherein the secondary endothermic cracking conversion is performed at a higher pressure than a pressure of the fuel device.

5. Process according to any of the claims 2 to 4, comprising a step of separating the hydrogen (106) from the unconverted ammonia depleted cracked gas product, for example by pressure swing adsorption.

6. Process according to the preceding claim, wherein the step of separating the hydrogen produces an off gas comprising nitrogen and hydrogen, said process comprising a step of mixing the hydrogen enriched fuel gas with the off gas and a step of redirecting the obtained hydrogen enriched fuel gas and off gas mix to the fuel device.

7. Process according to any of the preceding claims, comprising a step of providing an ammonia trim fuel (108) to the fuel device as an additional fuel gas stream for heating the main endothermic cracking conversion.

8. Process according to any of the preceding claims, comprising a step of exhausting an effluent gas stream (115) produced by the combustion reaction and/or by the main endothermic cracking conversion, said process comprising a step of recovering heat (116) from the exhausted effluent gas stream in a heat recovery step and a step of heating the secondary endothermic cracking conversion (104) with the recovered heat.

9. Process according to the preceding claim, wherein the effluent gas stream comprises a flue gas stream and/or comprises the cracked gas product.

10. Process according to any of claims 8 or 9, wherein the step of exhausting the effluent gas stream (115) comprises exhausting the effluent gas stream in an effluent gas duct configured to discharge the effluent gas stream and the heat recovery step (116) comprises recovering heat from the flue gas stream in the effluent duct.

11. Process according to claims 9 and 10, wherein the step of exhausting the effluent gas stream (115) comprises exhausting the flue gas stream, in particular in a flue gas duct, such as an exhaust tunnel and the process comprises a step of discharging the flue gas stream from the firing chamber and the heat recovery step (116) comprises recovering heat, in particular in the flue gas duct, from the flue gas stream discharged from the firing chamber.

12. Process according to claims 9 and 10 or according to claim 11, wherein the step of exhausting the effluent gas stream (115) comprises exhausting the cracked gas product, in particular exhausting the cracked gas product in a cracked gas conduit.

13. Apparatus (1) for producing a cracked gas product comprising hydrogen by an endothermic cracking reaction of an ammonia feedstock stream, said apparatus comprising:
• A main reactor (2) arranged for producing a cracked gas product comprising hydrogen, nitrogen and remaining unconverted ammonia by a main endothermic cracking conversion of the ammonia feedstock stream,
• An ammonia separation unit (3) arranged for separating the remaining unconverted ammonia from the cracked gas and arranged for producing a separated unconverted ammonia stream and a unconverted ammonia depleted cracked gas product,
• A secondary reactor (6) arranged for producing a hydrogen enriched fuel gas by a secondary endothermic cracking conversion of the remaining unconverted ammonia of the cracked gas product into a hydrogen enriched fuel gas,
• A fuel device (20) arranged for heating the main catalytic endothermic cracking conversion,
• A hydrogen enriched fuel gas duct (7) arranged for feeding said hydrogen enriched fuel gas to the fuel device arranged to perform a combustion of the hydrogen enriched fuel gas.

14. Apparatus (1) according to claim 13, comprising a hydrogen separation unit (11) arranged for separating hydrogen from the unconverted ammonia depleted cracked gas product, thus producing a hydrogen product gas and an offgas comprising hydrogen and nitrogen.

15. Apparatus (1) according to the preceding claim, comprising a mixer, wherein the hydrogen separation unit (11) is fluidically connected to an offgas duct (15) arranged for the circulation of said offgas to the mixer, said mixer being arranged to mix together the offgas and the hydrogen enriched fuel gas and to feed them to the fuel device via a fuel header.
